# FASCICULE DE BREVET EUROPEEN

(11) **EP 0 596 456 B1**
(45) Date de publication et mention de la délivrance du brevet: **03.09.1997**
(21) Numéro de dépôt: 93117740.6
(22) Date de dépôt: 02.11.1993
(51) Int. Cl.: H04R 19/00, G01L 9/00

(54) **Procédé de fabrication de transducteurs capacitifs intégrés**
Methode zur Herstellung eines integrierten kapazitiven Transduktors
Method of manufacturing an integrated capacitive transductor

(30) Priorité: 05.11.1992 FR 9213452
(43) Date de publication de la demande: 11.05.1994
(73) Titulaire: CSEM, Centre Suisse d'Electronique et de Microtechnique S.A., CH-2007 Neuchâtel (CH)
(72) Inventeur: Berggvist, Johan Wilhelm, CH-2014 Bôle (CH); Rudolf, Félix, CH-2014 Bôle (CH)
(74) Mandataire: Caron, Gérard

(56) Documents cités:
- EP-A- 0 331 992
- TECHNISCHE RUNDSCHAU, vol.83, no.36, 6 Septembre 1991, BERN CH pages 72 - 75 F.KRULL 'Mikrosensoren und -aktoren - Schöne kleine Welt'
- JOURNAL OF PHYSICS E. SCIENTIFIC INSTRUMENTS, vol.21, no.12, Décembre 1988, BRISTOL GB pages 1114 - 1128 J.C.GREENWOOD 'Silicon in mechanical sensors'

## Description

L'invention concerne un procédé de fabrication d'une pluralité de transducteurs capacitifs intégrés et plus particulièrement un procédé de fabrication de tels transducteurs à partir notamment de deux substrats en matériau semiconducteur par une technique de micro-usinage et d'assemblage de ces matériaux. De tels transducteurs sont notamment destinés à être utilisés comme microphones.

Parmi les transducteurs ou microphones utilisés généralement, on trouve principalement des transducteurs de type capacitif, piézo-électrique ou électro-dynamique. Parmi ceux-ci, les transducteurs de type capacitif se distinguent par leur bonne sensibilité, leur large bande passante, leur grande stabilité et leur faible consommation, et sont pour ces qualités généralement utilisés dans les appareils auditifs.

Ces transducteurs capacitifs comprennent classiquement un diaphragme, ou membrane, qui est sensible à une pression acoustique, et une plaque de support rigide. Le diaphragme s'étend en regard de la plaque de support et est séparé de celle-ci par un espace ouvert de faible épaisseur. Ces deux éléments forment ainsi chacun une des deux électrodes d'un condensateur. Quand le diaphragme se déplace en réponse à une pression acoustique, la capacité du condensateur change et ce changement est détecté par un préamplificateur dont les entrées sont respectivement reliées à ce diaphragme et à la plaque de support rigide.

Il existe une grande variété de constructions de ces transducteurs classiques et ils peuvent être fabriqués en de nombreux matériaux, avec une préférence pour un film métallisé ou métallique comme matériau formant le diaphragme et pour du silicium comme matériau formant la plaque de support.

Un tel transducteur et son procédé de fabrication sont décrits dans la publication intitulée "Development of an electret microphone in silicon" de A. J. Sprenkels et al., dans la revue Sensors and Actuators, 17(1989) aux pages 509-512.

Selon ce procédé connu, on se munit d'un substrat en silicium que l'on oxyde pour former une couche de SiO₂ sur ses faces supérieure et inférieure. La couche supérieure de SiO2 est alors gravée pour former des cavités dans la surface du substrat. Le substrat est alors à nouveau oxydé, à la suite de quoi la couche inférieure de SiO2 est gravée pour former d'une part des conduits d'air débouchant chacun dans une des cavités ménagées sur la surface supérieure et d'autre part des passages destinés à la fixation du diaphragme et débouchant à la périphérie des cavités ménagées dans la surface supérieure. Le substrat est à nouveau oxydé et le diaphragme, formé d'une feuille de Mylar® (PETP), est disposé sur la surface supérieure du substrat de manière à recouvrir les cavités et les passages, et fixé au substrat à l'aide d'un polymère qui est pulvérisé dans les passages de fixation. L'électrode supérieure est alors déposée par évaporation sur la feuille formant le diaphragme tandis que l'électrode inférieure est formée par le silicium du substrat.

La fabrication de ces transducteurs selon ce procédé présente toutefois certains inconvénients.

En effet, les différences importantes dans la nature des divers matériaux utilisés (Mylar®, silicium, polymère) conduit à des problèmes d'incompatibilité avec les technologies de micro-usinage des matériaux semiconducteurs utilisées pour la fabrication de ces transducteurs. De plus, selon ce procédé, il est impossible d'obtenir une reproductibilité des caractéristiques entre des séries de transducteurs provenant de différentes plaquettes de silicium. Ce procédé ne permet pas non plus de maîtriser les tensions internes mécaniques présentes dans le diaphragme et, par conséquent, ne permet pas un contrôle fiable de la sensibilité du transducteur.

L'invention a donc pour but principal de remédier aux inconvénients de l'art antérieur susmentionné en proposant un procédé de fabrication d'une pluralité de transducteurs capacitifs intégrés permettant de fournir ces transducteurs avec des caractéristiques fiables et reproductibles et en ne faisant intervenir que des matériaux compatibles avec les technologies de micro-usinage des matériaux semiconducteurs.

A cet effet, l'invention a pour objet un procédé de fabrication d'une pluralité de transducteurs capacitifs intégrés comprenant, chacun, une électrode mobile et une électrode fixe, le procédé comprenant les étapes suivantes:
- fourniture d'un premier substrat en un matériau semiconducteur,
- fourniture d'un deuxième substrat en un matériau semiconducteur,
- formation d'une couche de liaison en un matériau isolant sur au moins une première face dudit premier substrat et/ou sur une première face dudit deuxième substrat,
- assemblage par soudure desdits premier et deuxième substrats à l'aide de ladite couche de liaison ou desdites couches de liaison de manière que soit les premières faces (14,22) soient situées en regard l'une de l'autre, soit ladite première face (14;22) dudit premier (10) ou deuxième substrat (12) soit située en regard de l'autre desdits premier et deuxième substrats,
- amincissement du deuxième substrat et, pour chacun des transducteurs,
- structuration du deuxième substrat par attaque sélective pour former un réseau d'orifices traversant toute l'épaisseur du deuxième substrat et pour définir le contour de ladite électrode fixe,
- attaque anisotrope sélective du premier substrat pour former un diaphragme s'étendant sensiblement en regard du réseau des orifices,
- élimination de la partie de ladite couche de liaison se trouvant entre le diaphragme et la partie du deuxième substrat comprenant le réseau d'orifices pour former un espace ouvert entre ledit diaphragme et ledit deuxième substrat, et
- réalisation d'un contact électrique avec chacun desdits premier et deuxième substrats,
ledit deuxième substrat et le diaphragme formant respectivement ladite électrode fixe et ladite électrode mobile.

L'utilisation exclusive de techniques de micro-usinage classiques de matériaux semiconducteurs dans le procédé de l'invention permet une miniaturisation maximale des transducteurs et limite le procédé à une suite d'étapes très simples, tout en assurant un bon contrôle des paramètres géométriques et électriques des transducteurs.

D'autres caractéristiques et avantages de l'invention apparaîtront à la lecture de la description suivante d'un procédé de fabrication selon l'invention donné à titre purement illustratif et non limitatif, cette description étant faite en liaison avec le dessin dans lequel:
- les figures 1 à 5, sont des vues en coupe, selon la ligne VI-VI de la figure 6, d'un transducteur capacitif intégré représenté à différentes étapes du procédé de fabrication de l'invention; et
- la figures 6 est une vue de dessus partiellement arrachée d'un transducteur obtenu selon le procédé de l'invention.

Bien que le procédé de l'invention permette la réalisation simultanée d'une pluralité de transducteurs sur un même substrat, la description et le dessin ne porteront, par simplification, que sur un transducteur seulement.

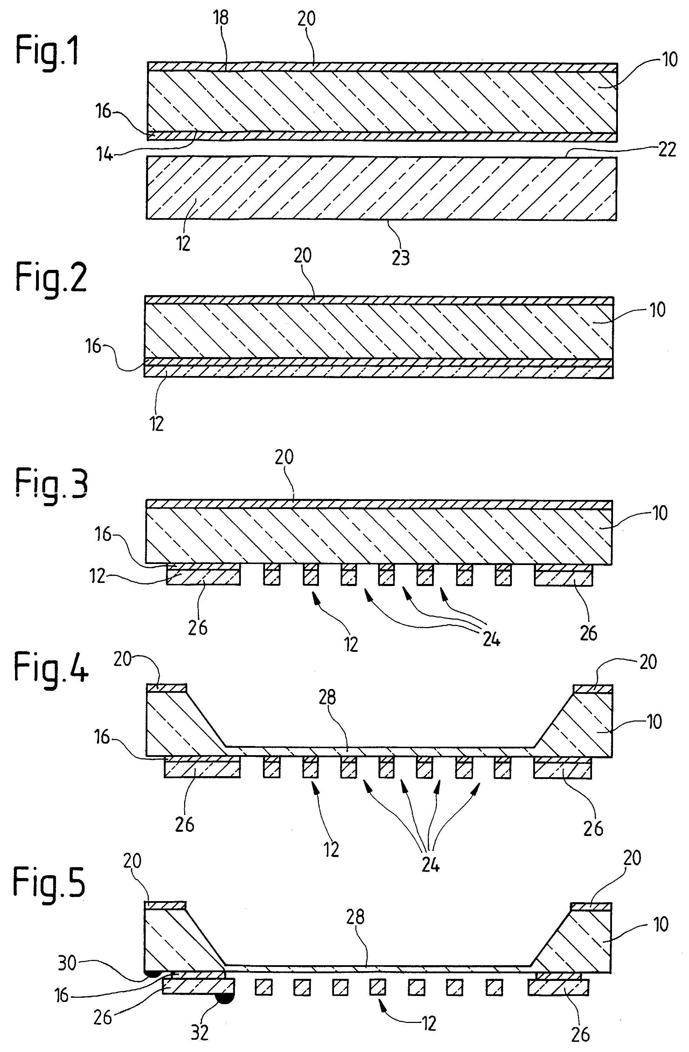

On notera tout d'abord que, compte tenu des faibles dimensions des transducteurs et pour des raisons pratiques que l'on comprend aisément, le procédé de fabrication selon l'invention s'applique à la fabrication simultanée d'un grand nombre de transducteurs comportant chacun une électrode fixe et un électrode mobile séparées par un espace ouvert de faible épaisseur, à partir de deux plaquettes complémentaires définissant un premier substrat 10 et un deuxième substrat 12 comme cela est représenté à la figure 1.

Par ailleurs, il est important de noter que les valeurs des différents paramètres tels que les températures, les temps, les réactifs utilisés etc... qui seront mentionnées ci-dessous ne sont nullement limitatives, et dépendent essentiellement des matériaux et des appareillages utilisés. Ces valeurs peuvent facilement être déterminées par l'homme du métier.

Les plaquettes (non représentées) définissant les premier et deuxième substrats 10, 12 à partir desquels est fabriqué le transducteur capacitif intégré sont réalisées en un matériau semiconducteur tel que le silicium monocristallin ayant une résistivité la plus faible possible et, de préférence, une orientation <100>.

A la figure 1, on a représenté le premier substrat 10 après la formation sur une première 14 de ses faces d'une couche de liaison 16 en un matériau isolant.

En l'occurrence, la couche de liaison 16 est réalisée en oxyde de silicium (SiO₂).

Dans l'exemple décrit, la couche 16 a été formée par oxydation thermique du premier substrat 10 dans un four à environ 1100°C et sous une atmosphère oxydante pendant quelques heures. A titre d'exemple, pour obtenir une couche 16 ayant 3µm d'épaisseur, on fait séjourner ce premier substrat 10 dans le four pendant environ 15 heures.

On remarque que la deuxième face 18 du premier substrat 10 n'a volontairement pas été protégée au cours de cette étape de formation de la couche 16 si bien qu'une couche 20 de même épaisseur et de même nature que la couche 16 a également été formée sur cette deuxième face 18. Cette couche 20 servira de couche de protection pour des étapes ultérieures du procédé comme cela ressortira de la suite de la description.

Il est bien entendu que, selon une variante, la formation de ces couches 16 et 20 de SiO₂ peut être réalisée par dépôt chimique ou physique en phase vapeur (CVD ou PVD).

Les couches 16 et 20 étant formées respectivement sur la première face 14 et sur la deuxième face 18 du premier substrat 10, l'étape suivante consiste, après préparation appropriée des premier et deuxième substrats 10, 12 en vue de leur assemblage ultérieur, à mettre en place le deuxième substrat 12 de manière qu'une première de ses faces 22 soit située en regard de la couche 16.

La préparation de la surface de la couche 16 et de la face 22 consiste par exemple en un nettoyage de ces surfaces tel que celui qui est décrit dans la publication intitulée "RCA Review" No 31 page 187, 1970.

Les deux substrats 10, 12 étant préparés, on procède à l'assemblage de ces derniers par soudure autogène. Pour ce faire, on introduit ces deux substrats 10 et 12 dans un four préchauffé à une température d'environ 1'000°C et contenant une atmosphère d'azote, d'oxygène ou d'oxygène humide.

On notera que selon une variante de réalisation, on peut aussi former sur la première face 22 du deuxième substrat 12 une deuxième couche de liaison de même nature et de la même façon que la couche de liaison 20, ou encore ne former qu'une seule couche de liaison sur la première face 22 du deuxième substrat 12 en vue de réaliser l'assemblage par soudure décrit ci-dessus.

A l'étape suivante illustrée à la figure 2, on procède à l'amincissement du deuxième substrat 12, c'est-à-dire que la deuxième face 23 de ce deuxième substrat 12, qui est exposée, est attaquée jusqu'à ce que ce deuxième substrat 12 atteigne une épaisseur déterminée.

Pour ce faire, on dispose, dans l'exemple décrit, les deux substrats 10 et 12 assemblés par la couche de liaison 16 dans une solution d'un agent de gravure à une concentration, à une température et pendant un temps déterminés pour obtenir l'épaisseur voulue.

De préférence, afin d'éviter une attaque du premier substrat 10 pendant cette étape d'amincissement du deuxième substrat 12, on utilise un agent de gravure sélectif n'attaquant pas la couche 20, par exemple, dans le présent cas, une solution de KOH (hydroxyde de Potassium).

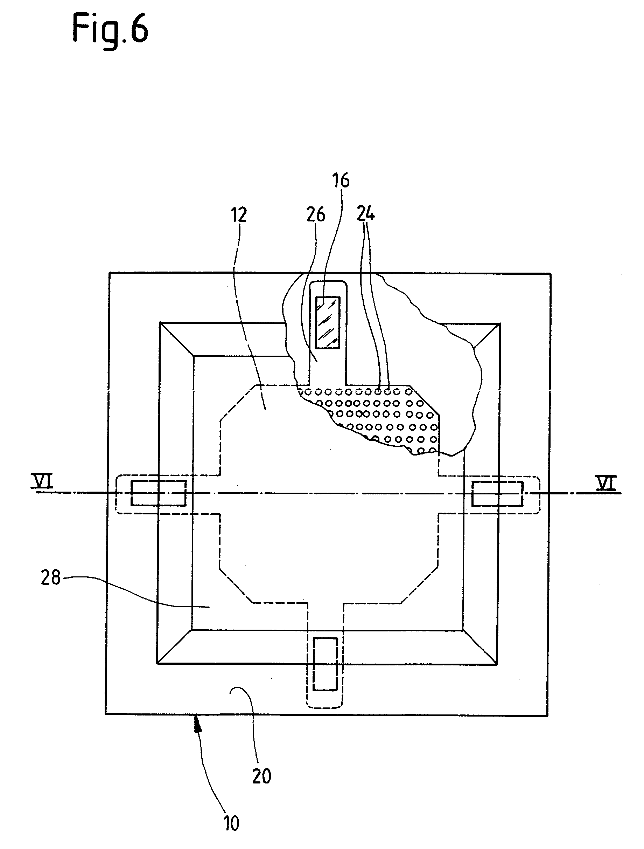

A la figure 3, on a illustré l'étape de structuration du deuxième substrat 12 aminci pour définir le contour de l'électrode fixe du transducteur et pour former un réseau d'orifices 24 traversant toute l'épaisseur de cette électrode fixe. Comme cela est visible à la figure 6, l'électrode fixe définie lors de cette étape de structuration du deuxième substrat 12 a la forme d'une plaque suspendue rigidement au premier substrat 10 au moyen de quatre bras 26.

Pour ce faire, on dépose une première couche de résine photosensible (non représentée), par exemple à la tournette, sur la face exposée du deuxième substrat 12, on insole cette couche de résine photosensible à travers un masque (également non représenté) , on élimine classiquement, par exemple par voie humide, les parties insolées de la couche de résine photosensible, et on grave anisotropiquement a l'aide d'un premier agent de gravure les parties du deuxième substrat 12 découvertes pour former les orifices 24. A l'aide d'un deuxième agent de gravure on grave ensuite les parties de la couche de liaison 16 situées au fond de ces orifices 24, puis on élimine les parties restantes de la couche photosensible.

L'opération de gravure du deuxième substrat 12 est réalisée, par exemple, au moyen d'un plasma au chlore, tandis que l'opération de gravure de la couche de liaison 16 est réalisée, par exemple, à l'aide d'une solution d'acide fluorhydrique (HF). L'élimination des parties restantes de la couche de résine photosensible est réalisée de façon classique, par exemple par voie humide dans un solvant adéquat ou encore au moyen d'un plasma sous atmosphère d'oxygène O₂.

A la figure 4 on a illustré l'étape d'attaque du premier substrat 10 en vue de former un diaphragme 28 s'étendant sensiblement en regard du réseau des orifices 24. Cette étape est identique à celle décrite en liaison avec la figure 3 à la différence du masque utilisé et du fait que l'ordre des premier et deuxième agents de gravure utilisés pour l'attaque du deuxième substrat 12 est inversé en raison de la nécessité d'éliminer d'abord la couche de protection 20 puis de graver anisotropiquement la partie du premier substrat 10 ainsi découverte, la couche de protection 20 et le premier substrat 10 étant respectivement réalisés en SiO2 et en silicium.

On précisera tout de même que, pendant cette attaque, le deuxième substrat 12 ainsi que la couche de liaison 16 sont protégés, par exemple mécaniquement, de tout contact avec le deuxième agent de gravure.

Les étapes suivantes illustrées à la figure 5 consistent à libérer le diaphragme 28 par élimination de la partie de la couche de liaison 16 se trouvant entre ce diaphragme 28 et la partie du deuxième substrat 12 comprenant le réseau des orifices 24, et à réaliser des plots de contact électrique 30, 32 avec le premier substrat 10 et, respectivement, le deuxième substrat 12.

Par l'élimination de cette partie de la couche de liaison 16, on forme un espace ouvert entre le diaphragme 28 et le deuxième substrat 12. L'élimination de cette partie de la couche de liaison 16 est par exemple réalisée par attaque chimique à l'aide d'une solution d'acide fluorhydrique (HF).

On notera à ce propos que l'espacement moyen entre les orifices 24 est très faible, de sorte que l'attaque de la couche de liaison 16 dans la zone de ces orifices 24 est suffisamment rapide pour ne pas affaiblir les attaches des bras de suspension 26 qui s'étendent à la périphérie du transducteur entre le premier substrat 10 et le deuxième substrat 12 et qui sont formées par les parties restantes de la couche de liaison 16.

Les plots de contacts 30, 32 sont réalisés par évaporation sous vide d'un métal, par exemple de l'aluminium, à travers un masque (non représenté). Bien entendu, ces plots de contact 30, 32 peuvent également être réalisés par pulvérisation cathodique.

Le transducteur capacitif ainsi formé, dont l'électrode mobile et l'électrode fixe sont respectivement constituées par le diaphragme 28 et le substrat 12, est alors séparé des autres transducteurs fabriqués en même temps et encapsulé dans un boîtier non représenté prévu à cet effet.

Il est à noter que les dessins ne représentent pas les dimension relatives exactes des différents éléments les uns par rapport aux autres, ces dimensions étant en outre fortement exagérées pour plus de clarté. Pour fixer les idées, un transducteur obtenu selon le procédé de l'invention a des dimensions générales de 2,3 x 2,3 x 1,0 mm³, la surface du diaphragme est d'environ 2,0 x 2,0 mm², l'épaisseur du diaphragme est d'environ 3,5 x 10⁻⁶ m, l'épaisseur de l'électrode fixe est d'environ 10 x 10⁻⁶ m et l'épaisseur de l'espace ouvert entre le diaphragme et l'électrode fixe, qui est occupé par de l'air, est d'environ 3 x 10⁻⁶ m. Quant aux orifices percés dans l'électrode fixe, ils ont un diamètre d'environ 15 x 10⁻⁶ m et sont aux nombre d'environ 400 par mm².

## Revendications

1. Procédé de fabrication d'une pluralité de transducteurs capacitifs intégrés comprenant chacun une électrode mobile et une électrode fixe, le procédé comprenant les étapes suivantes:
- fourniture d'un premier substrat (10) en un matériau semiconducteur,
- fourniture d'un deuxième substrat (12) en un matériau semiconducteur,
- formation d'une couche de liaison (16) en un matériau isolant sur au moins une première face (14) dudit premier substrat (10) et/ou sur une première face (22) dudit deuxième substrat (12),
- assemblage par soudure desdits premier (10) et deuxième substrats (12) à l'aide de ladite couche de liaison (16) ou desdites couches de liaison de manière que soit les premières faces (14,22) soient situées en regard l'une de l'autre, soit ladite première face (14;22) dudit premier (10) ou deuxième substrat (12) soit située en regard de l'autre desdits premier et deuxième substrats,
- amincissement du deuxième substrat (12) et, pour chacun des transducteurs,
- structuration du deuxième substrat (12) par attaque sélective pour former un réseau d'orifices (24) traversant toute l'épaisseur du deuxième substrat (12) et pour définir le contour de ladite électrode fixe,
- attaque anisotrope sélective du premier substrat (10) pour former un diaphragme (28) s'étendant sensiblement en regard du réseau des orifices (24),
- élimination de la partie de ladite couche de liaison (16) se trouvant entre le diaphragme (28) et la partie du deuxième substrat (12) comprenant le réseau des orifices (24) pour former un espace ouvert entre ledit diaphragme (28) et ledit deuxième substrat (12), et
- réalisation d'un contact électrique (30,32) avec chacun desdits premier (10) et deuxième substrats (12),
ledit deuxième substrat (12) et le diaphragme (28) formant respectivement ladite électrode fixe et ladite électrode mobile.

2. Procédé selon la revendication 1, caractérisé en ce que ladite couche de liaison (16) est formée sur la première face (14) du premier substrat (10), et en ce que, préalablement à l'assemblage par soudure des deux substrats (10,12), on forme une deuxième couche de liaison en un matériau isolant sur ladite première face (22) dudit deuxième substrat (12).

3. Procédé selon la revendication 1 ou 2, caractérisé en ce que l'étape d'amincissement comporte une attaque uniforme de la surface exposée (23) dudit deuxième substrat (12) jusqu'à une épaisseur prédéterminée.

4. Procédé selon la revendication 1, caractérisé en ce qu'il comporte en outre une étape de formation d'une couche de protection (20) de la deuxième face (18) dudit premier substrat (10).

5. Procédé selon l'une des revendication 1 à 3, caractérisé en ce que l'étape de structuration du deuxième substrat (12) comprend les étapes successives suivantes :
- dépôt d'une couche de résine photosensible à la surface de la face exposée du deuxième substrat (12),
- insolation de la couche de résine photosensible à travers un masque,
- développement de la partie insolée de ladite couche photosensible pour découvrir des zones localisées de ladite face exposée du deuxième substrat (12),
- gravure desdites zones localisées découvertes dudit deuxième substrat (12) pour former ledit réseau d'orifices (24), et
- élimination des parties restantes de ladite couche de résine photosensible.

6. Procédé selon la revendication 4, caractérisé en ce que l'étape d'attaque anisotrope sélective du premier substrat (10) comprend les étapes successives suivantes :
- dépôt d'une couche de résine photosensible sur ladite couche de protection (20) de la deuxième face (18) dudit premier substrat (10),
- insolation de ladite couche de résine photosensible à travers un masque,
- développement de la partie insolée de ladite couche photosensible pour découvrir une partie de ladite couche de protection (20) se trouvant sensiblement en regard dudit réseau d'orifices (24),
- élimination par gravure de ladite partie découverte de ladite couche de protection (20) pour découvrir une partie de ladite deuxième face (18) dudit premier substrat (10),
- gravure de ladite partie découverte de ladite deuxième face (18) dudit premier substrat (10) pour former ledit diaphragme (28), et
- élimination des parties restantes de ladite couche de résine photosensible.

7. Procédé selon la revendication 6, caractérisé en ce que lors des étapes d'élimination de la partie découverte de la couche de protection (20) et de gravure dudit premier substrat (10), le deuxième substrat (12) est protégé de tout contact avec les agents de gravure.

8. Procédé selon la revendication 7, caractérisé en ce que le deuxième substrat (12) est protégé mécaniquement.

9. Procédé selon l'une des revendications précédentes, caractérisé en ce que l'étape d'élimination de ladite couche de liaison (16) est réalisée par voie humide.

10. Procédé selon l'une des revendications précédentes, caractérisé en ce que les étapes de formation desdites couches de liaison (16) et de formation de ladite couche de protection (20) consistent à faire croître thermiquement un oxyde du matériau semiconducteur du premier (10) et, respectivement, du deuxième substrat (12).

11. Procédé selon l'une des revendications précédentes, caractérisé en ce que l'étape de formation des contacts (30,32) comprend une métallisation par évaporation sous vide.

## Patentansprüche

1. Verfahren zum Herstellen einer Mehrzahl von integrierten kapazitiven Wandlern, von denen jeder eine bewegliche Elektrode und eine feste Elektrode umfaßt, welches Verfahren die folgenden Schritte umfaßt:
- Bereitstellen eines ersten Substrats (10) aus einem Halbleitermaterial,
- Bereitstellen eines zweiten Substrats (12) aus einem Halbleitermaterial,
- Bildung einer Verbindungsschicht (16) aus einem isolierenden Material auf mindestens einer ersten Seite (14) des ersten Substrats (10) und/oder auf einer ersten Seite (22) des zweiten Substrats (12),
- Fügen des ersten (10) und zweiten Substrats (12) durch Verschweißen mit Hilfe der Verbindungsschicht (16) oder der Verbindungsschichten derart, daß entweder die ersten Seiten (14, 22) einander gegenüber liegen oder die erste Seite (14, 22) des ersten (10) oder zweiten Substrats (12) gegenüber dem anderen ersten bzw. zweiten Substrat liegen,
- Verdünnen des zweiten Substrats (12) und, für jeden der Wandler,
- Strukturieren des zweiten Substrats (12) durch selektiven Angriff zur Bildung eines Netzes von Öffnungen (24), das die gesamte Dicke des zweiten Substrats (12) durchsetzt und zum Definieren der Kontur der festen Elektrode,
- anisotroper selektiver Angriff des ersten Substrats (10) zur Bildung einer Membran (28), die sich im wesentlichen gegenüber dem Netz von öffnungen (24) erstreckt,
- Eliminieren der Partie der Verbindungsschicht (16), die sich zwischen der Membran (28) und der Partie des zweiten Substrats (12), das das Netz von öffnungen (24) umfaßt, zur Bildung eines offenen Raums zwischen der Membran (28) und dem zweiten Substrat (12), und
- Realisieren des elektrischen Kontakts (30, 32) mit jedem der ersten (10) und zweiten (12) Substrate, wobei das zweite Substrat (12) und die Membran (28) die feste Elektrode bzw. bewegliche Elektrode bilden.

2. Verfahren nach Anspruch 1, dadurch gekennzeichnet, daß die Verbindungsschicht (16) auf der ersten Seite (14) des ersten Substrats (10) gebildet wird und daß vor dem Zusammenfügen durch Schweißen der beiden Substrate (10, 12) eine zweite Verbindungsschicht aus einem isolierenden Material der ersten Seite (22) des zweiten Substrats (12) gebildet wird.

3. Verfahren nach Anspruch 1 oder 2, dadurch gekennzeichnet, daß der Schritt des Verdünnens einen gleichförmigen Angriff auf die exponierte Oberfläche (23) des zweiten Substrats (12) bis zu einer vorbestimmten Dicke umfaßt.

4. Verfahren nach Anspruch 1, dadurch gekennzeichnet, daß es ferner einen Schritt der Bildung einer Schutzschicht (20) der zweiten Seite (18) des ersten Substrats (10) umfaßt.

5. Verfahren nach einem der Ansprüche 1 bis 3, dadurch gekennzeichnet, daß der Schritt der Strukturierung des zweiten Substrats (12) die folgenden aufeinanderfolgenden Schritte umfaßt:
- Aufbringen einer Photoresistschicht auf die Oberfläche der exponierten Seite des zweiten Substrats (12),
- Belichten der Photoresistschicht durch eine Maske,
- Entwickeln der belichteten Partie der Photoresistschicht zum Freilegen von lokalisierten Zonen der exponierten Seite des zweiten Substrats (12),
- Ätzen der freigelegten lokalisierten Zone des zweiten Substrats (12) zur Bildung des Netzes von öffnungen (24), und
- Entfernen der verbleibenden Partien der Photoresistschicht.

6. Verfahren nach Anspruch 4, dadurch gekennzeichnet, daß der Schritt des anisotropen selektiven Angriffs des ersten Substrats (10) die folgenden aufeinanderfolgenden Schritte umfaßt:
- Aufbringen einer Schicht aus Photoresist auf die Schutzschicht (20) der zweiten Seite (18) des ersten Substrats (10),
- Belichtung der Photoresistschicht durch eine Maske,
- Entwickeln der belichteten Partie der Photoresistschicht zum Freilegen einer Partie der Schutzschicht (20), die sich im wesentlichen gegenüber dem Netz von Öffnungen (24) befindet,
- Eliminieren durch Ätzen der freigelegten Partie der Schutzschicht (20) zum Freilegen einer Partie der zweiten Seite (18) des ersten Substrats (10),
- Ätzen der freigelegten Partie der zweiten Seite (18) des ersten Substrats (10) zur Bildung der Membran (28), und
- Entfernen der verbleibenden Partien der Photoresistschicht.

7. Verfahren nach Anspruch 6, dadurch gekennzeichnet, daß während des Schrittes des Entfernens der freigelegten Partie der Schutzschicht (20) und des Ätzens des ersten Substrats (10) das zweite Substrat (12) gegen jeglichen Kontakt mit Ätzmitteln geschützt wird.

8. Verfahren nach Anspruch 7, dadurch gekennzeichnet, daß das zweite Substrat (12) mechanisch geschützt wird.

9. Verfahren nach einem der vorangehenden Ansprüche, dadurch gekennzeichnet, daß der Schritt des Eliminierens der Verbindungsschicht (16) auf feuchtem Wege ausgeführt wird.

10. Verfahren nach einem der vorangehenden Ansprüche, dadurch gekennzeichnet, daß die Schritte der Bildung der Verbindungsschichten (16) und der Bildung der Schutzschicht (20) darin bestehen, thermisch ein Oxyd aus Halbleitermaterial des ersten (10) bzw. des zweiten Substrats (12) aufwachsen zu lassen.

11. Verfahren nach einem der vorangehenden Ansprüche, dadurch gekennzeichnet, daß der Schritt der Bildung von Kontakten (30, 32) eine Metallisierung durch Niederschlag im Vakuum umfaßt.

## Claims

1. Process for the manufacture of a plurality of integrated capacitive transducers each comprising one mobile electrode and one fixed electrode, the process comprising the following stages:
- supplying a first substrate (10) of a semiconductor material,
- supplying a second substrate (12) of a semiconductor material,
- forming a connecting layer (16) of an insulating material on at least one first face (14) of said first substrate (10) and/or on a first face (22) of said second substrate (12),
- assembling by welding of said first (10) and second substrates (12) by means of said connecting layer (16) or said connecting layers in such a way that either said first faces (14, 22) are situated facing each other, or said first face (14; 22) of said first (10) or second substrate (12) is situated facing the other of said first and second substrates,
- thinning the second substrate (12) and, for each of the transducers,
- structuring the second substrate (12) by selective etching to form a network of orifices (24) traversing the entire thickness of the second substrate (12) and to define the contour of said fixed electrode,
- selective anisotropic etching of the first substrate (10) to form a diaphragm (28) extending substantially facing the network of orifices (24),
- eliminating the part of said connecting layer (16) located between the diaphragm (28) and the part of the second substrate (12) comprising the network of orifices (24) to form an open space between said diaphragm (28) and said second substrate (12), and
- forming an electrical contact (30, 32) with each of said first (10) and second substrates (12),
said second substrate (12) and the diaphragm (28) forming said fixed electrode and said mobile electrode respectively.

2. Process according to claim 1, characterized in that said connecting layer (16) is formed on the first face (14) of the first substrate (10) and in that, before assembly by welding of the two substrates (10, 12), a second connecting layer is formed of an insulating material on said first face (22) of said second substrate (12).

3. Process according to claim 1 or 2, characterized in that the thinning stage comprises a uniform etching of the exposed surface (23) of said second substrate (12) down to a predetermined thickness.

4. Process according to claim 1, characterized in that it also comprises a stage of formation of a protecting layer (20) of the second face (18) of said first substrate (10).

5. Process according to any one of claims 1 - 3, characterized in that the structuration stage of the second substrate (12) comprises the following successive stages:
- depositing a layer of photosensitive resin on the surface of the exposed face of the second substrate (12),
- insulating the layer of photosensitive resin using a mask,
- developing the insulated part of said photosensitive layer to uncover the localised areas of said exposed face of the second substrate (12),
- etching said uncovered localised areas of said second substrate (12) to form said network of orifices (24), and
- eliminating the remaining parts of said layer of photosensitive resin.

6. Process according to claim 4, characterized in that the stage of selective anisotropic etching of the first substrate (10) comprises the following successive stages:
- depositing a layer of photosensitive resin on said protecting layer (20) of said second face (18) of said first substrate (10),
- insulating said layer of photosensitive resin using a mask,
- developing the insulated part of said photosensitive layer to uncover a part of said protecting layer (20) located substantially facing said network of orifices (24),
- eliminating said uncovered part of said protecting layer (20) by etching to uncover a part of said second face (18) of said first substrate (10),
- etching said uncovered part of said second face (18) of said first substrate (10) to form said diaphragm (28), and
- eliminating the remaining parts of said layer of photosensitive resin.

7. Process according to claim 6, characterized in that, during the stages of elimination of the uncovered part of the protecting layer (20) and of etching said first substrate (10), the second substrate (12) is protected against any contact with the etching agents.

8. Process according to claim 7, characterized in that the second substrate (12) is mechanically protected.

9. Process according to one of the preceding claims, characterized in that the elimination stage of said connecting layer (16) is made using a liquid.

10. Process according to one of the preceding claims, characterized in that the stages in the formation of said connecting layers (16) and of formation of said protecting layer (20) consist in causing an oxide of a semiconductor material of the first (10) and of the second substrate (12) respectively to grow thermally.

11. Process according to any one of the preceding claims, characterized in that the stage of the formation of contacts (30, 32) comprises metallisation by vacuum evaporation.
